# EUROPEAN PATENT APPLICATION

(11) **EP 3 182 304 A1**
(43) Date of publication of application: **21.06.2017**
(21) Application number: 16203912.7
(22) Date of filing: 29.03.2013
(51) Int. Cl.: G06F 17/30

(54) **COMPUTER-IMPLEMENTED METHOD FOR STORING UNLIMITED AMOUNT OF DATA AS A MIND MAP IN RELATIONAL DATABASE SYSTEMS**

(62) Divisional of application: 13461516.0
(71) Applicant: Pilab S.A., 50-130 Wroclaw (PL)
(72) Inventor: PIECKO, Krystian, 53-648 Wroclaw (PL)
(74) Representative: Kancelaria Eupatent.pl Sp. z.o.o

(57) **Abstract**

A computer implemented method for storing, in a memory, data and information defining relations between the data to enable storage and access to data across a plurality of complex arrangements, the method comprising: creating a first table, a second table, a third table, a fourth table, a fifth table, a sixth table and a mind map structure comprising nodes and directed links, wherein each node of the mind map is directed to a data set identifier and a data set name in the first table, and each directed link of the mind map is directed to a relation identifier in the fifth table.

## Description

The object of the present invention is a computer-implemented method and system for creating and managing a database.

The database is a data storage concept evolving for decades since the 1960s to ease increasing difficulties in designing, building, and maintaining complex information systems (multi-user systems with a large amount of data). Another term directly related to databases is a database management system which enables the effective handling of databases. It shall nevertheless be noted that the terms database and DBMS define different entities, they are inseparable: a database's properties are determined by its supporting DBMS. A DBMS is presently a complex software system such as general-purpose DBMSs, like Oracle or Microsoft SQL Server.

Prior art discloses some computer-implemented method and system for creating and managing a database. In particular there are three major DBMS approaches widely used in the industry i.e relational databases, object database and graph databases.

A relational database is a collection of data items organized as a set of formally described tables from which data can be accessed easily. A relational database is created using the relational model. The software used in a relational database is called a relational database management system (RDBMS). A relational database is the predominant choice in storing data [Wikipedia]. It consists of n number tables and each table has its own primary key. The relational database was first defined in June 1970 by Edgar Codd, of IBM's San Jose Research Laboratory.

The main problem when using a relational database is the complexity that arises when it is first created. It is vital that the defined relationships between the tables are correct and that each set of information is linked to its pair. Although less information has to be entered in total than with other databases, making sure every point is set up correctly is a slow process. Furthermore, the relationships can become extremely difficult when a relational database contains numerous tables.

An object database (also object-oriented database management system) is a database management system in which information is represented in the form of objects as used in object-oriented programming. Object databases are different from relational databases and belong together to the broader database management system [Wikipedia].

An object database stores complex data and relationships between data directly, without mapping to relational rows and columns, and this makes them suitable for applications dealing with very complex data. Objects have a many to many relationship and are accessed by the use of pointers. Pointers are linked to objects to establish relationships. Another benefit of an OODBMS is that it can be programmed with small procedural differences without affecting the entire system. This is most helpful for those organizations that have data relationships that are not entirely clear or need to change these relations to satisfy the new business requirements.

Disadvantages of object databases include lower efficiency when data is simple and relationships are simple, late binding may slow access speed, data and operations being separated, very low responsiveness to changes in problem space, inadequate design for concurrent problems.

Over the years there have been designed hybrid object-relational databases. For example a pre-grant publication US 2003/0208493 A1 entitled "Object relational database management system" discloses an object relational database management system permitting a client application to access one or more data sources. The client application directs queries to an object server component, to obtain data from the data sources. The object server component works with an object definition component to fulfill the queries. The object definition component accesses an object definition database to obtain and use metadata, in the form of programmatic objects, about the location and structure of the data stored in the data sources. An optional object manager component can work with the object definition component to edit and create new metadata or, via the object server component, to work with and create new instances of the data sources.

As far as graph databases are concerned, these change a bit the storage and definitions paradigm. Most software developers are used to storing data in tabular form in a relational database. This approach has worked well for many applications for a long time, but presently shows its drawbacks. Relational databases have difficulties scaling. Unfortunately, more and more of today's innovative applications require massive data to be processed. This is the need for the emergence of many of new approaches such as Graph Databases. Tables are not web native at all. The web is a collection of pages that are hyperlinked, not identically-shaped rows in a gigantic table. A graph, as known from math, or as informally drawn by most engineers on whiteboards, is a much more natural representation for data that is native to the web. Much of the data processed by today's innovative applications lives elsewhere. The time of stovepipe applications is over. Some applications don't own any substantial percentage of their own data any more, such as some social feed aggregators. (source: http://infogrid.org/trac/wiki/GraphDatabase)

A pre-grant publication number US2012096002 entitled "SYSTEMS AND METHODS FOR GENERATING AND MANAGING A UNIVERSAL SOCIAL GRAPH DATABASE", discloses a computer-implemented method for determining connections between entities includes receiving private information from a user, retrieving public information from publicly available sources, and matching the public information with the private information. The method also includes generating a graph database with the public and private information, determining connections between entities in the graph database, and determining strength of connectivity between entities in the graph database. The disclosure provides a system that tracks public and private connections between people and provides connection and profile information as a software platform via the Internet and at least one application programming interface. The system may implement or generate at least one graph database. The graph database may be updated in real time. The system may be capable of being used on a large scale to power cloud or software as a service based application that services simultaneous users and run simultaneous algorithms.

From known databases, such as ORACLE ®, there is known an ALTER command. The process of modifying database structures directly requires locking the whole database structure that will be modified. There is also a related LOCK command that effectuates the freeze of the database structure for the time of modification such as adding, searching for or modifying records of a given table.

In production, end-user database systems, in such cases there are used special scripts that use for this purpose special triggers, which execute ALTER and/or LOCK commands automatically.

Each time an operation of adding a column to a database locks a table. Further, the ALTER command closes currently executed data processing tasks i.e. transactions(s). This results in that all processing operations executed at varying number of parameters are ineffective and potentially threaten integrity of data gathering - if the data are collected very quickly, the size of a buffer may be insufficient.

The use of the aforementioned commands in databases that are updated very frequently is very disadvantageous as it requires databases to stop certain services. Hence it would also be beneficial to create a database system that does not require to stop the aforementioned services when for example a new column is to be added to an existing table.

The drawbacks of known graph databases include for example increased memory requirements and difficulties in presenting information to a user in a clear way. Further drawbacks of current database systems include lack of possibility of extending database in real time and difficulties in understanding how a complex database is designed.

Taking into account the foregoing prior art there is a need to design and implement an efficient database model that is especially adapted to large scale databases, is easily scalable and has reduced memory requirement in comparison to graph, relational or object-oriented databases.

Up to now such problems have been addressed with a use of more powerful hardware such as database servers having higher performance and more memory instead of solutions related to design of the databases.

The first object of the present invention is a computer implemented database system comprising data structures for storing, in a memory, data and information defining relations between the data, the system further comprising a first data structure, stored in the memory, comprising a definition of at least one data set wherein each data set comprises a data set identifier and logically holds data objects of the same type; a second data structure, stored in the memory, comprising definitions of properties of objects wherein each property comprises an identifier of the property and an identifier of a set, from the first data structure, the property is assigned to; a third data structure, stored in the memory, comprising definitions of objects wherein each object comprises an identifier and an identifier of a set, from the first data structure, the object is assigned to; a fourth data structure, stored in the memory, comprising definitions of properties of each object wherein each property of an object associates a value with an object, from the third data structure, and a property identifier, from the second data structure, the object is assigned to; a fifth data structure, stored in the memory, comprising definitions of relations wherein each relation comprises an identifier of the relation; and a sixth data structure, stored in the memory, for storing definitions of relations between objects wherein each objects relation associates a relation, from the fifth data structure, to two objects from the third data structure.

Preferably, the system comprises a further property of name assigned to each entry in the first data structure to the second data structure and to the fifth data structure.

Advantageously, the system comprises a seventh data structure, stored in the memory, for storing definitions of relations between sets wherein each sets relation associates a relation, from the fifth data structure, to two sets from the first data structure.

A second object of the present invention is a computer implemented method for creating and managing a database system comprising data structures for storing, in a memory, data and relations between the data, the method comprising the steps of creating a first data structure, stored in the memory, comprising a definition of at least one data set wherein each data set comprises a data set identifier and logically holds data objects of the same type; creating a second data structure, stored in the memory, comprising definitions of properties of objects wherein each property comprises an identifier of the property and an identifier of a set, from the first data structure, the property is assigned to; creating a third data structure, stored in the memory, comprising definitions of objects wherein each object comprises an identifier and an identifier of a set, from the first data structure, the object is assigned to; creating a fourth data structure, stored in the memory, comprising definitions of properties of each object wherein each property of an object associates a value with an object, from the third data structure, and a property of the set, from the second data structure, the object is assigned to; creating a fifth data structure, stored in the memory, comprising definitions of relations wherein each relation comprises an identifier of the relation; and creating a sixth data structure, stored in the memory, for storing definitions of relations between objects wherein each objects relation associates a relation, from the fifth data structure, to two objects from the third data structure.

A third object of the present invention is a computer implemented method for creating and managing a database system comprising data structures for storing, in a memory, data and relations between the data, the method comprising the steps of creating a mind map structure wherein each node of the mind map represents a set in the first data structure and each branch represents a relation in the fifth data structure of the database according to the first object of the present invention.

Preferably, the method, according to the third object of the present invention, comprises the steps of assigning a name to each node of the mind map wherein each name of respective node is the name property of a record of the first data structure; and assigning a name to each branch of the mind map wherein each name of respective branch is the name property of the fifth data structure.

Preferably, the method, according to the third object of the present invention, comprises the steps of assigning properties to each node of the mind map wherein each property is an entry in the second data structure.

In one advantageous embodiment, in the method, according to the second object of the present invention, the process of adding an object to the database comprises the steps of creating a new entry in the third data structure; for each object property of the given set defined in the second data structure, creating an entry in the fourth data structure.

Preferably, in the method, according to the second object of the present invention, the process of adding an object to the database further comprises the steps of creating relations of the new object with existing objects by means of the sixth data structure.

In one advantageous embodiment, in the method, according to the second object of the present invention, a process of removing an object from the database comprises the steps of identifying an object to be removed; fetching the unique identifier of the object to be removed; removing the object entry from the third data structure; removing all entries in the fourth data structure related to the object identifier being removed from the database.

Preferably, in the method, according to the second object of the present invention, a process of removing an object from the database further comprises the steps of removing any existing relations of the removed object with other existing objects by means of deleting entries in the sixth data structure that relate to the object being removed.

A fourth object of the present invention is also computer software comprising program code means for performing all the steps of the computer-implemented method according to the present invention when said program is run on a computer.

A fifth object of the present invention is also a computer readable recording medium storing computer-executable instructions performing all the steps of the computer-implemented method according to the present invention when executed on a computer.

Another object of the invention is a computer implemented method for storing, in a memory, data and information defining relations between the data to enable storage and access to data across a plurality of complex arrangements, the method comprising: creating a first table comprising definitions of at least one data set, wherein a definition of a data set comprises (i) a unique data set identifier and (ii) a data set name; creating a second table comprising definitions of data properties of the at least one data set, wherein a definition of a data property comprises (i) a unique data property identifier, and (ii) a unique data set identifier, from the first table, the data property being assigned to; creating a third table comprising definitions of data objects of the at least one data set, wherein a definition of a data object comprises (i) a unique data object identifier and (ii) a unique data set identifier, from the first table, the data object being assigned to; creating a fourth table comprising definitions of data object values of the at least one data set, wherein a definition of a data object value comprises (i) a unique data object identifier, from the third table, (ii) a unique data property identifier, from the second table, the data object value being assigned to, and (iii) a data property value; creating a fifth table comprising definitions of relations of the at least one data set, wherein a definition of a relation comprises (i) a unique relation identifier, and (ii) a relation name; creating a sixth table comprising definitions of data object relations, wherein a definition of a data object relation comprises a unique relation identifier, from the fifth table, associating two data object identifiers from the third table; and creating a mind map structure comprising nodes and directed links, wherein (i) each node of the mind map is directed to a data set identifier and a data set name in the first table, and (ii) each directed link of the mind map is directed to a relation identifier in the fifth table.

The method may further comprise creating a seventh table comprising definitions of data set relations, wherein a definition of a data set relation comprises a unique relation identifier, from the fifth table, associating two data set identifiers from the first table.

Creating the mind map structure may further comprise assigning information of linked data objects to each directed link of the mind map, the information of linked data objects corresponding to a data object relation in the sixth table.

The method may further comprise assigning a property type name to each said definition of the data property in the second table.

Creating the mind map structure may further comprise assigning a node name to each node of the mind map, the node name corresponding to a data set name in the first table.

Creating the mind map structure may further comprise assigning a node data property to each node of the mind map, the node data property corresponding to a data property in the second table.

Creating the mind map structure may further comprise assigning one or more data objects to each node of the mind map, the one or more data objects corresponding to one or more data object identifiers in the third table.

Creating the mind map structure may further comprise assigning one or more node values to each node of the mind map, the one or more node values corresponding to one or more data object values in the fourth table.

Creating the mind map structure may further comprise assigning a link name to each directed link of the mind map, the link name corresponding to a relation name in the fifth table.

Creating the mind map structure may further comprise assigning information of linked sets to each directed link of the mind map, the information of linked sets corresponding to a set relation in the seventh table.

The method may further comprise adding a new data object.

Adding the new data object may comprise adding a new node to the mind map.

Adding the new data object may comprise adding a new directed link to the mind map.

Adding the new data object may comprise adding a new data object entry to the third table, the new data object entry comprising (i) a new unique data object identifier and (ii) a new data set identifier, from the first table, the new data object being assigned to.

Adding the new data object may comprise adding a new data object value entry to the fourth table, the new data object value entry comprising (i) a new unique data object identifier, from the third table, (ii) a new data property identifier, from the second table, and (iii) a new property value.

These and other objects of the invention presented herein are accomplished by providing a computer-implemented method and system for creating and managing a database. Further details and features of the present invention, its nature and various advantages will become more apparent from the following detailed description of the preferred embodiments shown in a drawing, in which:
FIG. 1 presents an exemplary relational database;
FIG. 2 and 3 show a new database system; and
Fig. 4 depicts a mind map that represents database of Fig. 2 and Fig. 3.
Fig. 5 shows a method for creation of a database system;
Fig. 6 presents a method of adding objects to the database system;
Fig. 7 presents a method of removing objects from the database system; and
Fig. 8 presents a method for creation of a database system using a mind map.

Relational databases are well established on the market but suffer from drawbacks of difficult scalability and extending, being also combined with limited suitability for really complex databases where there are for example 100 tables and 200 relations. In very complex database systems the designer of a particular database has to be aware of every single table and how data from this particular table may relate to data from the remaining 99 tables. Having this knowledge at hand for all 100 tables is an enormous task.

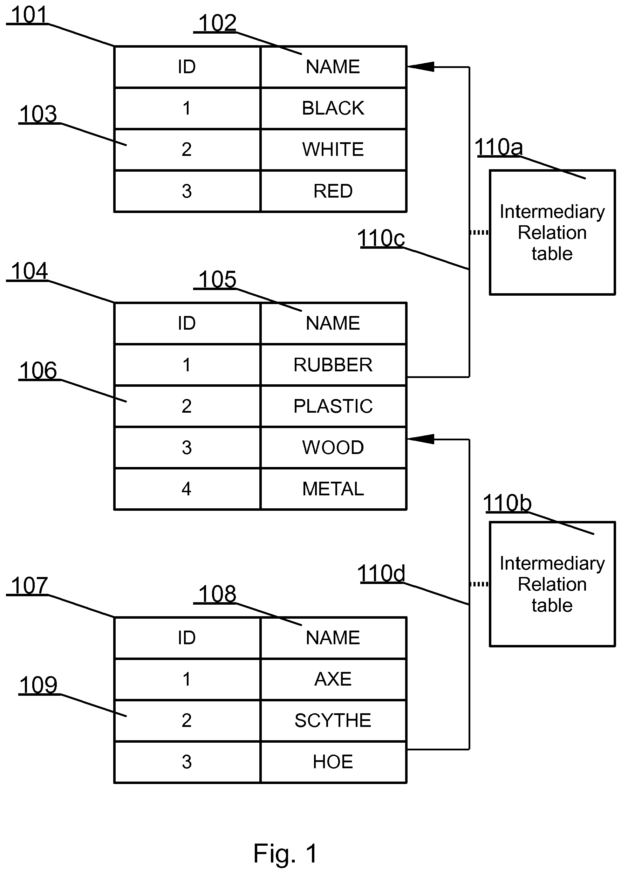

FIG. 1 presents an exemplary, simple relational database schema. The database comprises three tables and two relations. The first table 101 is holding colors data and has two columns, namely name of the color (NAME) 102 and identifier of the color (ID) 103. The second table 104 is holding materials data and has two columns, namely name of the material (NAME) 105 and identifier of the material (ID) 106. The third table, namely table 107 is holding tools data and has two columns, namely name of the tool (column → 'NAME') 108 and identifier of the tool (column → 'ID') 109.

Tables 101 and 107 have three entries while table 104 has four entries. The colors table 101 and the materials table 104 are related, which is defined by means of a relation 100c.

Typically one defines foreign keys in a database to model relationships in the real world. Relationships between real-world entities are usually complex, involving numerous entities each having multiple relationships with each other. For example, a family has multiple relationships between multiple people. In addition all the relationships exist at the same time. In a relational database, however, there are considered only relationships between pairs of tables. These tables can be related in one of three different ways: one-to-one, one-to-many or many-to-many.

The relation 100c is for example many-to-many relation where a color may be assigned to many materials but at the same time a material may be assigned to many colors.

Such relation in a real database system is implemented by means of an intermediary relation table 100a that provides mapping between elements of each table.

On the same technical basis, in Fig. 1, there is defined another relation between materials table and tools table 100d utilizing an intermediary relation table 100b. The relation is for example many-to-many relation where a material may be assigned to many tools but at the same time a tool may be assigned to many materials.

A relational database may therefore be summarized as follows: there are at least two sets of elements and at least one relation that defines how elements from the first set are related to the elements of the second set, whereas the relation involves creation of a data structure mapping elements of the first set to elements of the second set. Typically the mapping is effected by means of unique identifiers (within each set) of the elements in each set.

The inventor has observed, that many problems that a relational database designer faces with respect to awareness of the complete design are a result of presenting real life events and entities on a very complex tables and relations diagram.

Real life cases are however suitably defined and presented by means of mind maps. Mind maps however, have not so far found their application in database systems.

A mind map is a diagram used to visually outline and present information. A mind map is usually created around a single object but may be created around multiple objects. Each object may have associated ideas, words and concepts. Usually, the major categories radiate from each node, and lesser categories are sub-branches of larger branches. Categories can represent words, ideas, tasks, or other items related to a central key word or idea.

Hence, the inventor has designed a system that can be easily outlined as a mind map and designed technically such that a mind map representation may easily be transferred to a databases system design level and data storage abstraction level.

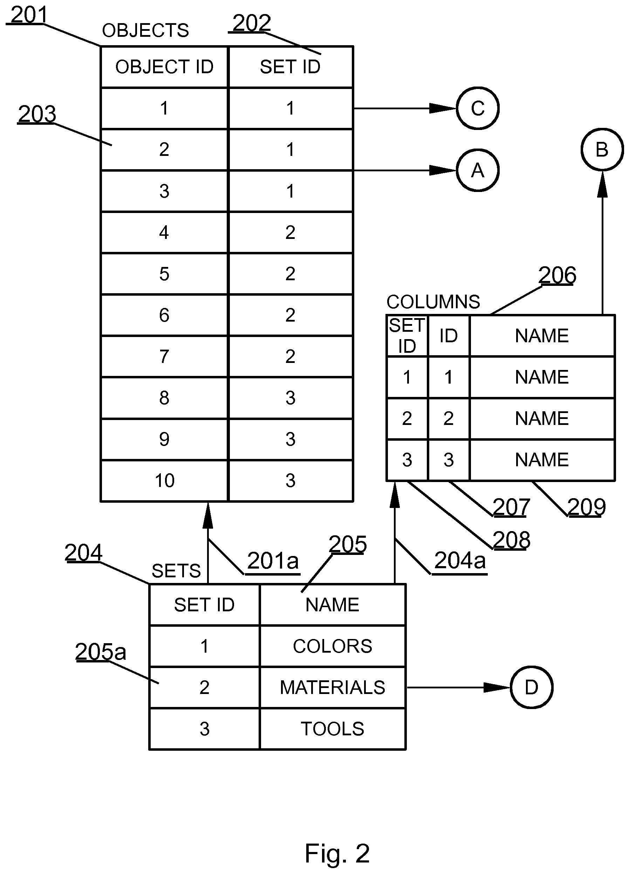

FIG. 2 shows a new database system according to the present invention. In order to perfectly cooperate with mind maps the database system according to the invention has been designed differently than known database systems. The database system comprises six core sets of data and optional sets. The core sets comprise SETS, OBJECTS, COLUMNS, CHARACTERISTICS, RELATIONS and OBJECTS RELATIONS. It has to be noted that the names above are exemplary only and the respective core sets are defined rather by their function within the system than their name.

In order to more easily understand differences between the relational database of Fig. 1 and the present invention, the same database and its data will be also used in Fig. 2.

The first set of data is called SETS 204, because it is used to logically hold data related to sets of data. The sets of data may be represented on a mind map as nodes. Each entry in the SETS data structure 204 comprises at least a unique identifier 205a and preferably also its name 205. Referring back to example from Fig. 1 there are three SETS, namely COLORS having ID of 1, MATERIALS having ID of 2 and TOOLS having ID of 3. The SETS data structure is a top level structure and does not refer to other data structures but other data structures refer to it as identified by respective arrows between the sets of Fig. 2.

Each set of data is, as in the real world, characterized by some properties typically called columns. Hence, the second set of data is called COLUMNS 206. A property, called typically a column, is uniquely identified with an identifier ID 207 and is associated with a set, defined in the SETS data structure 204, by means of an identifier herein called SET ID 208. A column also preferably is associated with a name 209. As indicated by an arrow 204a, the COLUMNS data structure logically, directly references the SETS data structure, because it uses the identifiers of sets. If for example each color of the set called COLORS had another property, say RGB value, there could be added an entry comprising the following values: '1', '4', 'RGB'. At this level of the system the types of respective data such as text, integer, BLOB are not considered as their application in the present system is routine work.

Referring back to example from Fig. 1 there are three columns wherein each column is associated with a textual identifier "NAME" 209. However, as can be readily seen by respective set identifiers, each column is associated with a different set, which corresponds to an arrangement of Fig. 1.

Having defined data structures of SETS and COLUMNS there may be defined objects that will form elements of respective SETS and will have properties defined by the COLUMNS data structure. Objects are held in the OBJECTS 201 data structure. This data structure holds entries uniquely identified with an identifier ID 203 and associated with a set, defined in the SETS data structure 204, by means of an identifier herein called SET ID 202. As indicated by an arrow 201 a, the OBJECTS data structure logically, directly references the SETS data structure, because it uses the identifiers of sets.

Referring back to example from Fig. 1 there are ten objects in the database, namely three colors, four materials and three tools. Hence, the OBJECTS data structure 201 comprises ten objects in order to match the data of the relational database presented in Fig. 1.

The fourth core data structure is a data structure that holds data entries of each property of each object. This data structure has been called CHARACTERISTICS 301 in Fig. 2. This is one of fundamental differences from all known databases where there are rows of data that comprise entries for all columns of a data table. In the present invention each property of an object is stored as a separate entry, which greatly improves scalability of the system and allows for example adding objects properties in real time.

The CHARACTERISTICS 301 data structure holds entries uniquely identified with an identifier OBJECT ID 302 and is associated with a property, defined in the COLUMNS data structure 206, by means of an identifier herein called COLUMNID 303. Further each entry in the CHARACTERISTICS data structure, comprises a value of the given property of the particular object. As indicated by respective arrows originating from sources A and B, the CHARACTERISTICS data structure 301 logically, directly references the COLUMNS data structure and the OBJECTS data structure, because it uses the identifiers from the respective data structures.

Referring back to example from Fig. 1 there are ten characteristics that result from the fact that in the example of Fig. 1 there are three colors, four materials and three tools. By means of an example one can easily recognize that the BLACK color refers to an object having ID of 1 and to property having ID of 1. By using these identifiers one may find out that the property description is "NAME" and that the object belongs to the set, whose description is "COLORS".

The fifth core data structure, of the databases system according to the present invention, is designed to hold data regarding relations present in the database. This data structure has been called herein RELATIONS 305. This is a very simple structure and in principle holds an identifier of a relation ID 307 and preferably also holds the textual description of the relation i.e. a NAME 306. As indicated by an arrow 305a, the RELATIONS data structure logically, directly references downwards the OBJECTS RELATIONS data structure, because the OBJECTS RELATIONS use the identifiers of the relations.

Referring back to mind maps, a relation present in the RELATIONS 305 data structure, is directly mapping to a branch between two nodes of a mind map. A relation may be of different types, however preferably, as in typical mind maps, a relation is provided with a textual description.

The last core data structure of the present invention is the mentioned OBJECTS RELATIONS data structure 308. This data structure is designed to provide mapping between a relation from the RELATIONS data structure 305 and two objects from the OBJECTS data structure 301. For example the first entry in the OBJECTS RELATIONS data structure 308 defines that the relation having identifier of 1 exists between object having an identifier of 1 and the object having an identifier of 6. Referring to Fig. 1 this is exactly a definition that a material of wood has color of black, which is defined, in relational database systems, by the intermediary relation table 110a (not shown in details).

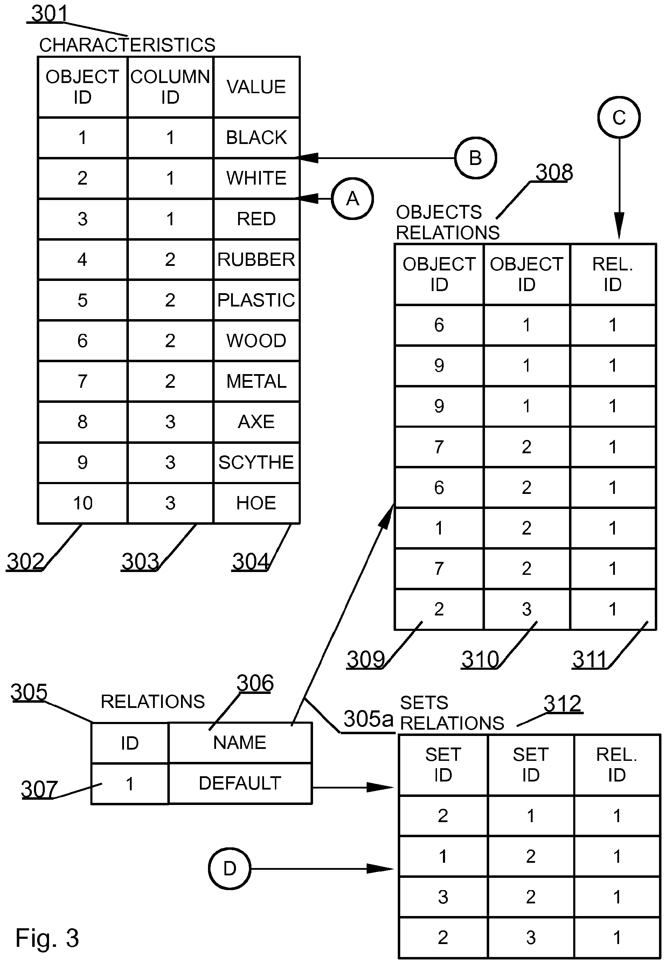

Optionally a seventh data structure exists in the database system of the present invention. This data structure holds data regarding relations between the respective data sets and in Fig. 3 is called SETS RELATIONS 312. This data structure is designed to provide mapping between a relation from the RELATIONS data structure 305 and two sets from the SETS data structure 204. For example, the first entry in the SETS RELATIONS data structure 312 defines that the relation having identifier of 1 exists between a set having an identifier of 1 and a set having an identifier of 2. Providing an entry in the SETS RELATION data structure 312 between a set having an identifier of 1 and a set having an identifier of 2 as well as between a set having an identifier of 2 and a set having an identifier of 1, allows for creating a bidirectional relation.

There is also a possibility of self referencing from a given set. For example such case may be present when there is a set of persons and there exists a student - teacher relation between persons assigned to a particular set.

As described, for example a relational database system of a hundred tables will in the present system be stored in the six above-described data structures. Naturally, most of the data will be kept in the OBJECTS and CHARACTERISTICS data structures.

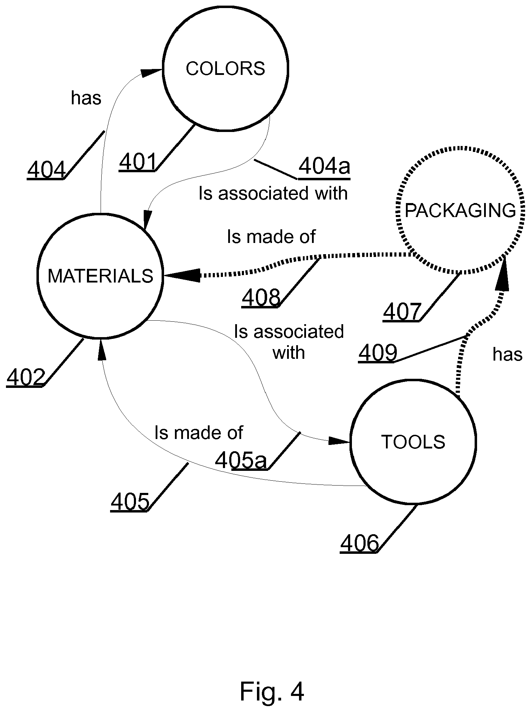

Fig. 4 depicts a mind map that represents the database of Fig. 2. There are three nodes that represent sets of data, namely COLORS 401, MATERIALS 402 and TOOLS 406. The mind map also defines branches between the respective nodes. Taking into account the relational database of Fig. 1 which has been defined according to the new database system in Fig. 2, there are four branches. The first branch 404 of the mind map is defined between COLORS 401 and MATERIALS 402 and means that a MATERIAL may have a COLOR. The second branch 404a of the mind map is defined between COLORS 401 and MATERIALS 402 and means that a COLOUR may be associated with a MATERIAL.

Similarly to the first two branches, the third branch 405 of the mind map is defined between MATERIALS 402 and TOOLS 406 and means that a TOOL may be made of a MATERIAL. The fourth branch 405a of the mind map is defined between MATERIALS 402 and TOOLS 406 and means that a MATERIAL may be associated with a TOOL.

The concept of Fig. 1 is further expanded in Fig. 3 to also encompass a possibility that a tool may have 409 its packaging 407 and the packaging is made of some materials 408.

Because of the fact the all identifiers may be generated automatically, during creation of the database system of Fig. 2 one may start from the mind map presented in Fig. 4. For each node a designer will create a name of a set and properties of the objects that will be kept in the set. Similarly, the designer will create branches as relations between the respective nodes i.e. data sets. Based on such mind map definition the system of Fig. 2 may be automatically generated from the mind map of Fig. 4. It is preferred that there is also a process of assigning properties to each node of the mind map wherein each property is an entry in the second data structure ie. the COLUMNS data structure.

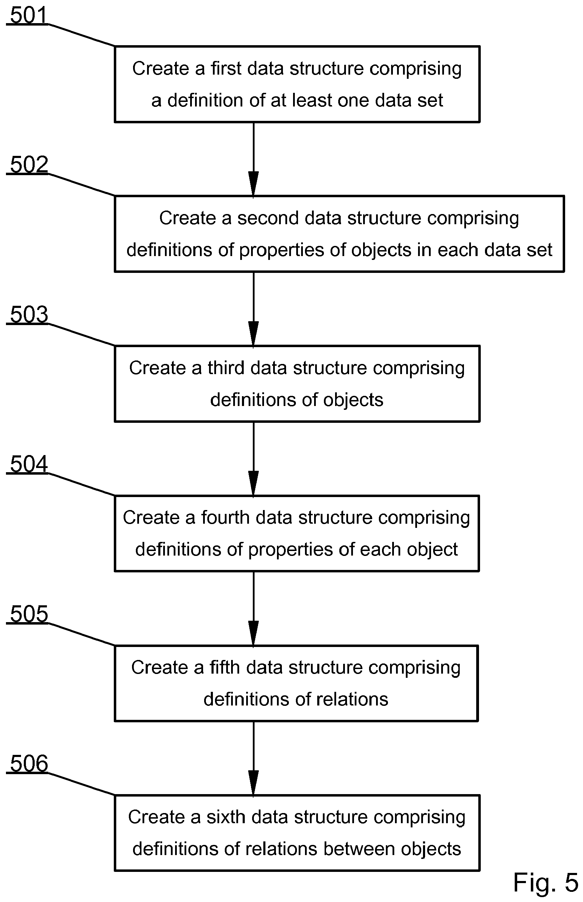

Fig. 5 shows a method for creation of database system. The computer implemented method stores data in a memory and comprises the following steps. At step 501 a first data structure is created and stored in the memory, wherein the first data structure comprises a definition of at least one data set wherein each data set comprises a data set identifier and logically holds data objects of the same type. Next, at step 502, a second data structure is created and stored in the memory, the second data structure comprising definitions of properties of objects wherein each property comprises an identifier of the property and an identifier of a set the property is assigned to.

Further, at step 503, a third data structure is created and stored in the memory, the third data structure comprising definitions of objects wherein each object comprises an identifier and an identifier of a set the object is assigned to. At step 504 a fourth data structure is created and stored in the memory, the fourth data structure comprising definitions of properties of each object wherein each property of an object associates a value with an object and a property of the set the object is assigned to. Next at step 505 a fifth data structure is created and stored in the memory, the fifth data structure comprising definitions of relations wherein each relation comprises an identifier of the relation. Finally, at step 506 a sixth data structure is created and stored in the memory, the sixth data structure comprising definitions of relations between objects wherein each objects relation associates a relation from the fifth data structure to two objects from the third data structure.

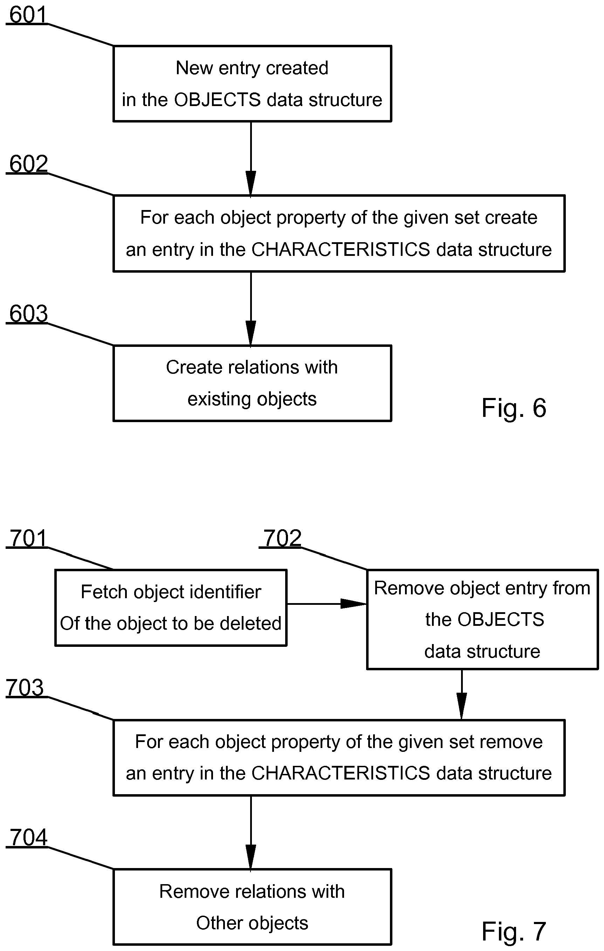

Taking into account the database system according to the present invention, as presented in Fig. 2, the process of adding an object (a record) to the database may be outlined as follows with reference to Fig 6. First a new entry is created 601 in the OBJECTS data structure 201. The object is therefore assigned to a given data set defined by the SETS data structure 204. Following that 602, for each object property of the given set defined in the COLUMNS data structure 206, there is created an entry in the CHARACTERISTICS data structure 301. Subsequently there may be created relations 603 of the new object with existing objects by means of the OBJECTS RELATIONS data structure.

Fig. 7 presents a method of removing objects from the database system. First an object to be removed is identified and its corresponding unique identifier is fetched 710. Next, at step 702, the object entry is removed from the OBJECTS data structure. The object is therefore removed from a given data set defined by the SETS data structure 204. Because properties of each object are stored separately, the next step 703 is to for each object property of the given set defined in the COLUMNS data structure 206, there is removed an entry in the CHARACTERISTICS data structure 301 related to the object identifier being removed from the database. Subsequently there are removed any existing relations 704 of the removed object with other existing objects by means of deleting entries in the OBJECTS RELATIONS data structure that related to the object being removed.

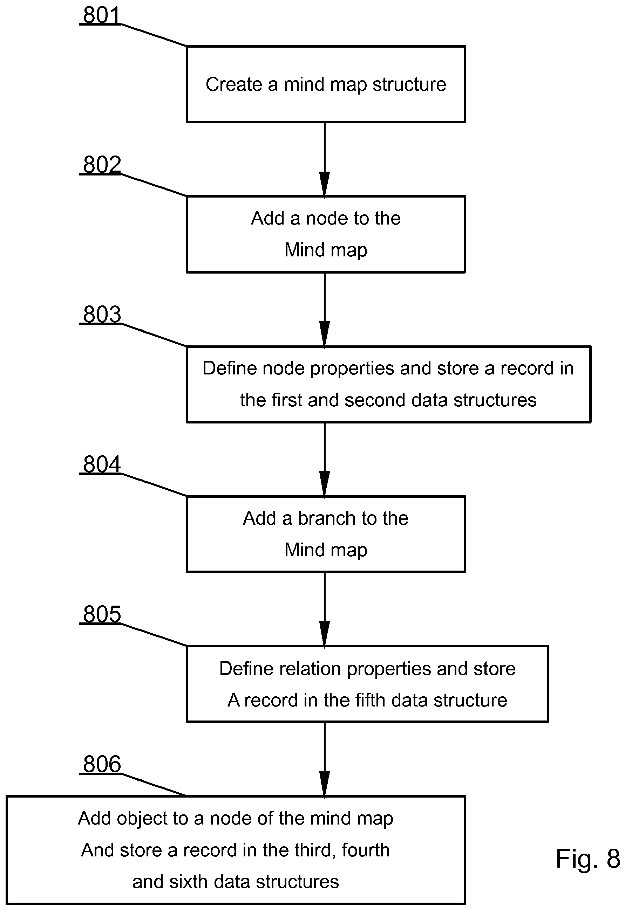

Fig. 8 presents a method for creation of the database system using a mind map. The first step 801 is to create a mind map structure. Defining a database system using a mind map is very beneficial and allows a designer to more easily seethe big picture in very complex database arrangements. A designer gains an ability to see how database sets are organized and what relations exist between the respective data sets.

At step 802 of the procedure, a new node is added to the mind map structure. This is typically executed by using graphical user interface by a database designer. A node of a mind map represents a set as defined with reference to Fig. 2. Therefore it is advantageous at this point to define, preferably using the graphical user interface, properties associated with the set associated with this particular node of the mind map. The next step 803 is executed to store a record in the first and second data structures, which are SETS data structure 204 and COLUMNS data structure 206 of Fig. 2 respectively.

The next step 804, is to create a branch within the mind map. A branch may start at a node of the mind map and end at the same node of the mind map to define a self-relation eg. There may be a set of users where there exists a hierarchy among users. Alternatively a branch may start at a node of the mind map and end at a different node of the mind map to define a relation between different nodes i.e. different sets of objects of the same kind.

The next step 805 is executed to store a record in the fifth data structure, which is RELATIONS data structure 305 of Fig. 3.

The last step of of the procedure, 806 is to add at least one object to existing data sets i.e. nodes of the mind map. A preferred way of adding objects to mind map nodes is by means of a graphical user interface. For example by choosing an option to add an object a user is presented with a set of properties that may be set for the new object. The properties are defined in the COLUMNS data structure 206 of Fig. 2. After the user provides an input, an object is added to the selected node of the mind map by storing one or more records in the third, fourth and sixth data structures that are the OBJECTS data structure 201, the CHARACTERISTICS data structure 301 and OBJECTS RELATIONS data structure 308 of Figs. 2 and 3 respectively.

Lastly, referring back to the problem of disadvantageous effects of ALTER and LOCK commands and the problem of it being beneficial to create a database system that does not require to stop the aforementioned services when for example a new column is to be added to an existing table.

This aim is realized since the database structure from a logical standpoint is a kind of transposition of prior art database structures. For example addition of a new column to a table instead of modifying physical structure of the table is just an operation of adding a new entry in the 206 structure, which does not require any kind of locking. Another advantage of the present database system is that an addition of a column to a table is much quicker than in prior art database systems since all processing is faster that invoking the known LOCK/ALTER commands. The aforementioned advantages are obtainable due to a specific arrangement of database metadata as shown in Fig. 2 and Fig. 3.

It can be easily recognized, by one skilled in the art, that the aforementioned a computer-implemented method and system for creating and managing a database may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer implemented method for storing, in a memory, data and information defining relations between the data to enable storage and access to data across a plurality of complex arrangements, the method comprising:
creating a first table comprising definitions of at least one data set, wherein a definition of a data set comprises (i) a unique data set identifier and (ii) a data set name;
creating a second table comprising definitions of data properties of the at least one data set, wherein a definition of a data property comprises (i) a unique data property identifier, and (ii) a unique data set identifier, from the first table, the data property being assigned to;
creating a third table comprising definitions of data objects of the at least one data set, wherein a definition of a data object comprises (i) a unique data object identifier and (ii) a unique data set identifier, from the first table, the data object being assigned to;
creating a fourth table comprising definitions of data object values of the at least one data set, wherein a definition of a data object value comprises (i) a unique data object identifier, from the third table, (ii) a unique data property identifier, from the second table, the data object value being assigned to, and (iii) a data property value;
creating a fifth table comprising definitions of relations of the at least one data set, wherein a definition of a relation comprises (i) a unique relation identifier, and (ii) a relation name;
creating a sixth table comprising definitions of data object relations, wherein a definition of a data object relation comprises a unique relation identifier, from the fifth table, associating two data object identifiers from the third table; and
creating a mind map structure comprising nodes and directed links, wherein (i) each node of the mind map is directed to a data set identifier and a data set name in the first table, and (ii) each directed link of the mind map is directed to a relation identifier in the fifth table.

2. The method of claim 1, further comprising creating a seventh table comprising definitions of data set relations, wherein a definition of a data set relation comprises a unique relation identifier, from the fifth table, associating two data set identifiers from the first table.

3. The method of any of previous claims, wherein creating the mind map structure further comprises assigning information of linked data objects to each directed link of the mind map, the information of linked data objects corresponding to a data object relation in the sixth table.

4. The method of any of previous claims, further comprising assigning a property type name to each said definition of the data property in the second table.

5. The method of any of previous claims, wherein creating the mind map structure further comprises assigning a node name to each node of the mind map, the node name corresponding to a data set name in the first table.

6. The method of any of previous claims, wherein creating the mind map structure further comprises assigning a node data property to each node of the mind map, the node data property corresponding to a data property in the second table.

7. The method of claim 6, wherein creating the mind map structure further comprises assigning one or more data objects to each node of the mind map, the one or more data objects corresponding to one or more data object identifiers in the third table.

8. The method of claim 7, wherein creating the mind map structure further comprises assigning one or more node values to each node of the mind map, the one or more node values corresponding to one or more data object values in the fourth table.

9. The method of any of previous claims, wherein creating the mind map structure further comprises assigning a link name to each directed link of the mind map, the link name corresponding to a relation name in the fifth table.

10. The method of any of previous claims, wherein creating the mind map structure further comprises assigning information of linked sets to each directed link of the mind map, the information of linked sets corresponding to a set relation in the seventh table.

11. The method of any of previous claims, further comprising adding a new data object.

12. The method of claim 11, wherein adding the new data object comprises adding a new node to the mind map.

13. The method of claim 11, wherein adding the new data object comprises adding a new directed link to the mind map.

14. The method of claim 11, wherein adding the new data object comprises adding a new data object entry to the third table, the new data object entry comprising (i) a new unique data object identifier and (ii) a new data set identifier, from the first table, the new data object being assigned to.

15. The method of claim 11, wherein adding the new data object comprises adding a new data object value entry to the fourth table, the new data object value entry comprising (i) a new unique data object identifier, from the third table, (ii) a new data property identifier, from the second table, and (iii) a new property value.
